# EUROPEAN PATENT SPECIFICATION

(11) **EP 3 336 108 B1**
(45) Date of publication and mention of the grant of the patent: **26.06.2019**
(21) Application number: 16834985.0
(22) Date of filing: 27.07.2016
(51) Int. Cl.: C08C 19/44, C08C 19/22, B60C 1/00, C08F 36/04, C08K 3/06, C08K 3/36, C08L 15/00, C08C 19/30, C08F 36/06, C08F 236/10

(54) **CONJUGATED DIENE POLYMER AND METHOD FOR PRODUCING SAME, POLYMER COMPOSITION, CROSSLINKED POLYMER, AND TIRE**
KONJUGIERTES DIENPOLYMER UND VERFAHREN ZUR HERSTELLUNG DAVON, POLYMERZUSAMMENSETZUNG, VERNETZTES POLYMER UND REIFEN
POLYMÈRE DE DIÈNE CONJUGUÉ MODIFIÉ ET SON PROCÉDÉ DE PRODUCTION, COMPOSITION POLYMÈRE, POLYMÈRE RÉTICULÉ, ET PNEU

(30) Priority: 10.08.2015 JP 2015158413
(43) Date of publication of application: 20.06.2018
(73) Proprietor: JSR Corporation, Tokyo 105-8640 (JP)
(72) Inventor: INOUE, Mitsunori, Tokyo 105-8640 (JP); ADACHI, Takumi, Tokyo 105-8640 (JP); YANAGIBASHI, Kenji, Tokyo 105-8640 (JP); TANAKA, Ryoji, Tokyo 105-8640 (JP)
(74) Representative: TBK
(86) International application number: PCT/JP2016/072080
(87) International publication number: WO 2017/026288

(56) References cited:
- EP-A1- 2 098 554
- EP-A1- 2 272 909
- EP-A1- 2 676 994
- EP-A1- 2 676 995
- WO-A1-2005/097845
- WO-A1-2008/123163
- WO-A1-2009/133936
- WO-A1-2011/155326
- WO-A1-2012/073880
- JP-A- 2007 039 614

## Description

### Technical Field

The present disclosure relates to a conjugated diene-based polymer, a production method therefor, a polymer composition, a crosslinked polymer, and a tire.

### Background Art

A conjugated diene-based polymer exhibits good properties (e.g., thermal resistance, abrasion resistance, mechanical strength, and processability). Thus, the conjugated diene-based polymer has been used in various products, including pneumatic tires, hoses, and vibrationproof rubber.

For example, a pneumatic tire must achieve excellent low fuel consumption performance in view of increasing awareness about environmental issues. In order to meet such a requirement, various conjugated diene-based polymers have been proposed (see, for example, Patent Document 1). Patent Document 1 discloses a modified conjugated diene-based rubber formed of a conjugated diene-based polymer having amino and alkoxysilyl groups bonded to the terminals of the polymer. Use of such a terminal-modified conjugated diene-based rubber as a material for a tire can lead to an improvement in dispersibility of a filler (e.g., carbon black or silica) incorporated into a rubber composition for an automotive tire, resulting in reduced energy loss.

### Prior Art Document

### Patent Document

Patent Document 1: International Patent Publication WO 2003/029299

### Summary of the Invention

### Problems to be Solved by the Invention

From the viewpoints, for example, environmental circumstances (e.g., global warming due to carbon dioxide emissions), increasing consumer awareness about resource saving and energy saving, and recent economic situations (e.g., an increase in the price of gasoline), pneumatic tires have recently been required to achieve further improved low fuel consumption performance. A rubber material ensuring prolongation of the product service life can contribute to a reduction in environmental load. Thus, demand has arisen for a rubber material that achieves small energy loss and excellent abrasion resistance.

In view of the foregoing, an object of the present disclosure is to provide a rubber material that can achieve well-balanced improvements in low hysteresis loss property and abrasion resistance.

### Solution to Problem

In order to solve the aforementioned problems, the present disclosure provides a conjugated diene-based polymer, a production method therefor, a polymer composition, a crosslinked polymer, and a tire, which are described below.
[1] A conjugated diene-based polymer comprising a structural unit derived from a conjugated diene compound and having, at a terminal of the polymer, at least one nitrogen-containing group represented by formula (1): 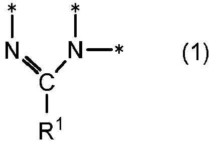 wherein R¹ is a hydrocarbyl group, and the symbol "*" is a bonding site.
[2] A method for producing a conjugated diene-based polymer, the method comprising the steps of:
   polymerizing a monomer containing a conjugated diene compound in the presence of an alkali metal compound or an alkaline earth metal compound, thereby preparing a polymer having an active terminal; and
   reacting the polymer having an active terminal with a modifying agent having a functional group capable of reacting with the active terminal and a nitrogen-containing group represented by the above formula (1):
[3] A polymer composition comprising the conjugated diene-based polymer of the above [1], or the conjugated diene-based polymer produced by the method of the above [2], silica, and a crosslinking agent.
[4] A crosslinked polymer produced through crosslinking of the polymer composition of the above [3].
[5] A tire, obtained by employing the crosslinked polymer of the above [4] as a tread material, a sidewall material, or both.

### Advantageous Effects of the Invention

According to the present disclosure, the dispersibility of a filler contained in the polymer composition can be improved. Thus, there can be prepared a vulcanized rubber exhibiting improvements in both low hysteresis loss property and abrasion resistance, which are required for automotive tires and the like.

### Description of Embodiments

Embodiments of the present disclosure will now be described in detail.

The conjugated diene-based polymer of the present disclosure includes a structural unit derived from a conjugated diene compound and has, at a terminal of the polymer, at least one nitrogen-containing group represented by the formula (1). The conjugated diene-based polymer of the present disclosure (hereinafter may be referred to as the "specific polymer") can be produced by polymerizing a monomer containing a conjugated diene compound to thereby prepare a polymer having an active terminal, and then reacting the polymer having an active terminal with a compound having the at least one nitrogen-containing group represented by the formula (1) and a functional group capable of reacting with the active terminal of the polymer (hereinafter the compound may be referred to as a "specific modifying agent").

### <Polymerization step>

Examples of the conjugated diene compound used in the polymerization step include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, 2-chloro-1,3-butadiene, and the like. Among these, 1,3-butadiene, isoprene, and 2,3-dimethyl-1,3-butadiene may preferably be used. Note that these conjugated diene compounds may be used either alone or in combination.

The specific polymer may be a homopolymer of the conjugated diene compound, but is preferably a copolymer of the conjugated diene compound and the aromatic vinyl compound from the viewpoint of improving the strength of the resulting rubber. In particular, it is preferable that the specific polymer be a copolymer formed of the monomer containing 1,3-butadiene and styrene, in view of high living properties during anionic polymerization. When the specific polymer is the aforementioned copolymer, the specific polymer may typically contain a random copolymer moiety formed of the conjugated diene compound and the aromatic vinyl compound. The specific polymer may contain a block moiety formed of the conjugated diene compound or the aromatic vinyl compound.

Examples of the aromatic vinyl compound used in the polymerization step include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinylpyridine, diphenylethylene, a tertiary amino group-containing diphenylethylene (e.g., 1-(4-N,N-dimethylaminophenyl)-1-phenylethylene), and the like. Among these, styrene is particularly preferable. Note that these aromatic vinyl compounds may be used either alone or in combination.

When the conjugated diene-based polymer is the copolymer of the conjugated diene compound and the aromatic vinyl compound, the amount of the aromatic vinyl compound used for the polymerization is preferably 3 to 55 mass%, more preferably 5 to 50 mass%, relative to the total amount of the conjugated diene compound and aromatic vinyl compound used for the polymerization, from the viewpoint of a good balance between low hysteresis loss property and wet skid resistance of the resultant vulcanized polymer. The amount of the structural unit derived from the aromatic vinyl compound in the polymer is measured by means of ¹H-NMR.

An additional monomer other than the conjugated diene compound and the aromatic vinyl compound may also be used for polymerization. Examples of the additional monomer include acrylonitrile, methyl (meth)acrylate, ethyl (meth)acrylate, hydroxyethyl (meth)acrylate, and the like. The additional monomer is preferably used in a ratio of less than 25 mass%, more preferably 15 mass% or less, and still more preferably 10 mass% or less, based on the total amount of the monomers used for polymerization.

The monomer may be polymerized using a solution polymerization method, a vapor-phase polymerization method, or a bulk polymerization method. Among these, the solution polymerization method is particularly preferable. The monomer may be polymerized in a batch-wise manner or a continuous manner. When using the solution polymerization method, the monomer that includes the conjugated diene compound may be polymerized in an organic solvent in the presence of an initiator and an optional randomizer, for example.

An alkali metal compound or an alkaline-earth metal compound may be used as the initiator. Examples of the alkali metal compound and the alkaline-earth metal compound include alkyllithiums such as methyllithium, ethyllithium, n-propyllithium, n-butyllithium, sec-butyllithium, and tert-butyllithium, 1,4-dilithiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, di-n-butylmagnesium, di-n-hexylmagnesium, ethoxypotassium, calcium stearate, and the like. Among these, lithium compounds are preferable. The initiator is preferably used in an amount of 0.2 to 20 mmol based on 100 g of the monomer used for polymerization. Note that these initiator may be used either alone or in combination.

The monomer may be polymerized in the presence of a compound that is obtained by mixing the alkali metal compound or the alkaline-earth metal compound with a compound having a functional group that interacts with silica (hereinafter the compound may be referred to as a "modifying initiator"). The functional group that interacts with silica can be introduced into the polymerization-initiation terminal of the conjugated diene-based polymer by polymerizing the monomer in the presence of the modifying initiator. The term "interaction" used herein means that a covalent bond is formed between molecules, or an intermolecular force (intermolecular electromagnetic force such as ion-dipole interaction, dipole-dipole interaction, a hydrogen bond, or Van der Waals force) that is weaker than a covalent bond is formed. The functional group that interacts with silica preferably has at least one atom selected from the group consisting of a nitrogen atom, a sulfur atom, a phosphorus atom, and an oxygen atom.

The modifying initiator is preferably a reaction product of a lithium compound (e.g., alkyllithium) and a nitrogen-containing compound (e.g., a secondary amine compound). Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tertbutyldimethylsilyl)piperazine, 1,3-ditrimethylsilyl-1,3,5-triazinane, and the like. When polymerizing the monomer in the presence of the modifying initiator, the modifying initiator may be prepared by mixing the alkali metal compound or the alkaline-earth metal compound with the compound having a functional group that interacts with silica, and added to the polymerization system. Alternatively, the alkali metal compound or the alkaline-earth metal compound, and the compound having a functional group that interacts with silica may be added to the polymerization system, and mixed in the polymerization system to prepare the modifying initiator.

The randomizer may be used to adjust vinyl bond content that represents the content of vinyl bonds (1,2-bond and 3,4-bond) in the polymer, for example. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, tetramethylethylenediamine, and the like. These compounds may be used either alone or in combination.

The organic solvent used for polymerization may be an organic solvent that is inert to the reaction. Examples of the organic solvent used for polymerization include aliphatic hydrocarbons, alicyclic hydrocarbons, aromatic hydrocarbons, and the like. It is preferable to use a hydrocarbon having 3 to 8 carbon atoms. Specific examples of the hydrocarbon having 3 to 8 carbon atoms include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene, cyclohexene, and the like. These organic solvents may be used either alone or in combination.

When using the solution polymerization method, the monomer concentration in the reaction solvent is preferably 5 to 50 mass%, and more preferably 10 to 30 mass%, from the viewpoint of maintaining the balance between productivity and polymerization controllability. The polymerization reaction temperature is preferably -20 to 150°C, more preferably 0 to 120°C, and particularly preferably 20 to 100°C. It is preferable to effect the polymerization reaction under a pressure sufficient to substantially maintain the monomer to be in a liquid phase. Such a pressure may be achieved by pressurizing the reactor using gas that is inert to the polymerization reaction, for example.

The aforementioned polymerization reaction can produce a conjugated diene-based polymer having an active terminal. The resultant conjugated diene-based polymer preferably has a weight average molecular weight (Mw) (in terms of polystyrene) of 1.0 × 10⁴ to 2.0 × 10⁶ as measured by means of gel permeation chromatography (GPC). An Mw of less than 1.0 × 10⁴ may lead to deterioration of low fuel consumption performance and abrasion resistance of the crosslinked polymer produced through crosslinking of the conjugated diene-based polymer, whereas an Mw exceeding 2.0 × 10⁶ may lead to poor processability of the polymer composition. The Mw is more preferably 3 × 10⁴ to 1.5 × 10⁶, still more preferably 5 × 10⁴ to 1.0 × 10⁶.

In the conjugated diene-based polymer having the active terminal, the vinyl bond content of the structural unit derived from the conjugated diene compound is preferably 30 to 65 mol%, more preferably 33 to 62 mol%, still more preferably 35 to 60 mol%. A vinyl bond content of less than 30 mol% may lead to very poor grip property, whereas a vinyl bond content exceeding 65 mol% may lead to a reduction in the abrasion resistance of the resultant vulcanized rubber. As used herein, the term "vinyl bond content" refers to the percentage of the structural unit having a vinyl bond with respect to all the structural units derived from the conjugated diene compound in the conjugated diene-based polymer. The vinyl bond content is measured by means of ¹H-NMR.

### <Modification step>

The active terminal of the conjugated diene-based polymer prepared through the aforementioned polymerization reaction is then reacted with the aforementioned specific modifying agent. This step can produce a conjugated diene-based polymer having a terminal modified with the functional group represented by the aforementioned formula (1).

In the aforementioned formula (1), the hydrocarbyl group represented by R¹ is preferably a C1 to C20 linear or branched alkyl group, a C3 to C20 cycloalkyl group, or a C6 to C20 aryl group. In particular, the hydrocarbyl group represented by R¹ is preferably a C1 to C20 alkyl group or a substituted or unsubstituted phenyl group. Examples of the substituent of the phenyl group include a methyl group, an ethyl group, and the like.

No particular limitation is imposed on the structure of the specific modifying agent, so long as it has a group represented by the aforementioned formula (1) and a functional group capable of reacting with the active terminal of the polymer. The specific modifying agent is preferably a silane compound; specifically, a compound represented by formula (2): 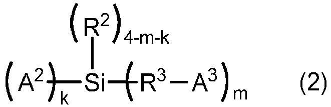 wherein R² is a hydrocarbyl group; R³ is a hydrocarbylene group; A² is a monovalent group containing a functional group capable of reacting with the active terminal of the polymer; A³ is a monovalent group having a group represented by the aforementioned formula (1) and having no active hydrogen; m and k are each independently an integer of 1 to 3; m + k ≤ 4; and, when a plurality of groups R², R³, A², or A³ are present, each of the groups R², R³, A², or A³ is as defined above.

In the aforementioned formula (2), the hydrocarbyl group represented by R² is preferably a C1 to C20 linear or branched alkyl group, a C3 to C20 cycloalkyl group, or a C6 to C20 aryl group. The hydrocarbylene group represented by R³ is preferably a C1 to C20 linear or branched alkanediyl group, a C3 to C20 cycloalkylene group, or a C6 to C20 arylene group.

Examples of the functional group contained in the monovalent group A² and capable of reacting with the active terminal of the polymer include an alkoxy group, a halogen atom, a cyclic ether group, a (thio)carbonyl group, an iso(thio)cyanate group, and the like. The functional group is preferably an alkoxy group. As used herein, the term "(thio)carbonyl group" refers to a carbonyl group or a thiocarbonyl group, and the term "iso(thio)cyanate group" refers to an isocyanate group or an isothiocyanate group.

In the group A³, one of the two nitrogen atoms in the aforementioned formula (1) is preferably bonded to R³. Specifically, the group A³ is preferably a group represented by formula (1-1) or (1-2): 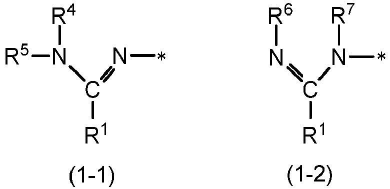 wherein R⁴ and R⁵ are each independently a hydrocarbyl group; R⁶ and R⁷ are each independently a hydrocarbyl group, or R⁶ and R⁷ are bonded to each other to form a cyclic structure with the carbon atom and the two nitrogen atoms; R¹ has the same meaning as defined in the formula (1); and the symbol "*" is a bonding site.

Specific examples of the hydrocarbyl group represented by R⁴ to R⁷ may be the same as those represented by R¹. The hydrocarbyl group is preferably an alkyl group. The cyclic structure formed through bonding between R⁶ and R⁷ is preferably a 5- to 8-membered ring, particularly preferably a 1-imidazolyl group or a 4,5-dihydro-1-imidazolyl group. In particular, the group A³ is preferably a group represented by the formula (1-1) in view of a more effective improvement in dispersibility of a filler. As used herein, the term "active hydrogen" refers to a hydrogen atom bonded to an atom other than a carbon atom, preferably a hydrogen atom having a binding energy lower than that of a carbon-hydrogen bond of polymethylene.

From the viewpoints of high reactivity with the conjugated diene-based polymer and dispersibility of silica, m is preferably 1, and k is preferably 2 or 3.

Examples of preferred specific modifying agents are as follows. Examples of the compound having a group represented by the formula (1-1) include N,N-dimethyl-N'-(3-(trimethoxysilyl)propyl)amidine, N,N-diethyl-N'-(3-(trimethoxysilyl)propyl)amidine, N,N-dimethyl-N'-(3-(triethoxysilyl)propyl)amidine, and the like. Examples of the compound having a group represented by the formula (1-2) include 2-methyl-1-(3-(trimethoxysilyl)propyl)-4,5-dihydro-1A-imidazole, 2-ethyl-1-(3-(trimethoxysilyl)propyl)-4,5-dihydro-lA-imidazole, 2-methyl-1-(3-(triethoxysilyl)propyl)-4,5-dihydro-1A-imidazole, 2-methyl-1-(3-(trimethoxysilyl)propyl)-1-imidazole, 2-ethyl-1-(3-(trimethoxysilyl)propyl)-1-imidazole, 2-methyl-1-(3-(triethoxysilyl)propyl)-1-imidazole, 2-phenyl-1-(3-(trimethoxysilyl)propyl)-4,5-dihydro-1A-imidazole, and the like. These specific modifying agents may be used singly or in combination of two or more species.

The modification reaction of the conjugated diene-based polymer having an active terminal may use the specific modifying agent alone, or may use a compound that does not have a nitrogen-containing group represented by the aforementioned formula (1) (hereinafter the compound may be referred to as an "additional modifying agent") in combination with the specific modifying agent. No particular limitation is imposed on the additional modifying agent, so long as it is a compound that has a functional group capable of interacting with silica and can react with the active terminal of the polymer. Specific examples of the additional modifying agent include compounds (I) to (III) described below.
(I) Compound (B2-1) represented by formula (3): 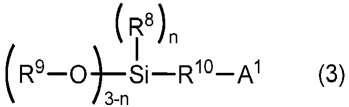 wherein A¹ is a monovalent functional group that includes at least one atom selected from the group consisting of a nitrogen atom, a phosphorus atom, and a sulfur atom, and does not include active hydrogen, the monovalent functional group being bonded to R¹⁰ through a nitrogen atom, a phosphorus atom, or a sulfur atom, R⁸ and R⁹ are each independently a hydrocarbyl group, R¹⁰ is a hydrocarbylene group, and n is an integer from 0 to 2, provided that a plurality of R⁸ are either identical or different when a plurality of R⁸ are present, and a plurality of R⁹ are either identical or different when a plurality of R⁹ are present.
(II) Compound (B2-2) that includes a functional group X and a group Y in its molecule, the functional group X being at least one functional group selected from the group consisting of a cyclic ether group, a (thio)carbonyl group, and an iso(thio)cyanate group, and the group Y including at least one atom selected from the group consisting of a nitrogen atom, a phosphorus atom, an oxygen atom, and a sulfur atom (provided that a nitrogen atom, a phosphorus atom, and a sulfur atom may be protected by a trisubstituted hydrocarbylsilyl group), and not including active hydrogen, the group Y differing from the functional group X
(III) Compound (B2-3) that includes two or more iso(thio)cyanate groups in its molecule

In the above formula (3), specific examples of the hydrocarbyl group represented by R⁸ and R⁹ may be the same as those represented by R². Specific examples of the hydrocarbylene group represented by R¹⁰ may be the same as those represented by R³. n is preferably 0 or 1.

A¹ includes at least one atom selected from the group consisting of a nitrogen atom, a phosphorus atom, and a sulfur atom (hereinafter may be referred to as "specific atom"), and is bonded to R¹⁰ through the specific atom. The specific atom is not bonded to active hydrogen. The specific atom may be protected by a protecting group. The term "protecting group" used herein refers to a functional group that converts A¹ into an inactive functional group with respect to the active terminal of the polymer. Examples of the protecting group include a trisubstituted hydrocarbylsilyl group and the like.

Specific examples of the compound (B2-1) include N,N-bis(trimethylsilyl)aminopropyltrimethoxysilane, N,N-bis(trimethylsilyl)aminopropylmethyldiethoxysilane, 3-(4-trimethylsilyl-1-piperazino)propylmethyldimethoxysilane,N-(1,3-dimethylbutylidene)-3-(triethoxysilyl)-1-propanamine, N-(1-methylpropylidene)-3-(triethoxysilyl)-1-propanamine, N-(cyclohexylidene)-3-(triethoxysilyl)-1-propanamine, 3-hexamethyleneiminopropyltrimethoxysilane, P,P-bis(trimethylsilyl)phosphinopropyltrimethoxysilane, 3-dimethylphosphinopropyltrimethoxysilane, S-trimethylsilylmercaptopropylmethyldimethoxysilane, S-trimethylsilylmercaptopropyltrimethoxysilane, 3-isocyanatopropyltrimethoxysilane, and the like.

In the compound (B2-2), the group Y is preferably a group including the nitrogen atom that is not bonded to active hydrogen. Specific examples of the compound (B2-2) include tetraglycidyl-1,3-bisaminomethylcyclohexane, 4-N,N-dimethylaminobenzophenone, 1,7-bis(methylethylamino)-4-heptanone, 2-dimethylaminoethylacrylate, 1,3-dimethyl-2-imidazolidinone 1-phenyl-2-pyrolidone, N-methyl-ε-caprolactam, N,N-diethylformamide, N,N-dimethylacetamide, N,N-dimethylacrylamide, 3-isocyanatopropyltrimethoxysilane, and the like.

Specific examples of the compound (B2-3) include 2,4-tolylene diisocyanate, 2,6-tolylene diisocyanate, diphenylmethane diisocyanate, naphthalene diisocyanate, triphenylmethane triisocyanate, p-phenylene diisocyanate, tris(isocyanatophenyl) thiophosphate, xylene diisocyanate, benzene-1,2,4-triisocyanate, naphthalene-1,2,5,7-tetraisocyanate, 1,4-phenylene diisothiocyanate, and the like. These additional modifying agents may be used singly or in combination of two or more species.

The aforementioned modification reaction may be effected as a solution reaction, for example. The solution reaction may be effected directly using the solution that includes unreacted monomers after completion of the polymerization reaction effected in the polymerization step, or may be effected after isolating the conjugated diene-based polymer included in the solution, and dissolving the conjugated diene-based polymer in an appropriate solvent (e.g., cyclohexane). The modification reaction may be effected in a batch-wise manner or a continuous manner. In this case, the modifying agent may be added using an arbitrary method. For example, the modifying agent may be added at a time, or may be added stepwise, or may be added successively.

The amount of the specific modifying agent used (or the total amount of two or more specific modifying agents used) is preferably 0.2 mol or more, more preferably 0.4 mol or more, relative to 1 mol of the metal atom (responsible for the polymerization reaction) of the polymerization initiator. An amount of 0.2 mol or more can lead to sufficient progress of the modification reaction of the polymer terminal by the specific modifying agent, and a sufficiently large improvement in the dispersibility of a filler. In order to reduce the amount of unreacted material in the solution after the modification reaction, the maximum amount of the specific modifying agent used is preferably less than 1.5 mol, more preferably less than 1.2 mol, relative to 1 mol of the metal atom (responsible for the polymerization reaction) of the polymerization initiator.

In the case where the specific modifying agent is used in combination with the additional modifying agent for the modification reaction, the amount of the additional modifying agent is preferably 30 mol% or less, more preferably 20 mol% or less, still more preferably 10 mol% or less, relative to the total amount of the specific modifying agent and the additional modifying agent, from the viewpoint of a sufficient progress of the reaction between the conjugated diene-based polymer and the specific modifying agent.

The modification reaction temperature is normally set to be equal to the polymerization reaction temperature, preferably -20 to 150°C, more preferably 0 to 120°C, and particularly preferably 20 to 100°C. If the modification reaction temperature is low, the viscosity of the conjugated diene-based polymer after modification may increase. If the modification reaction temperature is high, the polymerization active terminal may be easily inactivated. The modification reaction time is preferably 1 minute to 5 hours, and more preferably 2 minutes to 1 hour.

The conjugated diene-based polymer included in the reaction solution may be isolated by performing a known solvent removal method (e.g., steam stripping) and a drying operation (e.g., heat treatment), for example. The Mooney viscosity of the conjugated diene-based polymer thus obtained may optionally be adjusted by adding an extender oil or the like. This process improves the processability of the modified conjugated diene-based polymer. Examples of the extender oil include aromatic oil, naphthenic oil, paraffinic oil, and the like. The extender oil may be used in an appropriate amount taking account of the monomer used for polymerization and the like. For example, the extender oil is used in an amount of 10 to 50 parts by mass based on 100 parts by mass of the conjugated diene-based polymer.

The specific polymer can thereby be produced. The specific polymer can improve the dispersibility of a filler, and thus can prepare a vulcanized rubber exhibiting improvements in both low hysteresis loss property and abrasion resistance, which are required for an automotive tire and the like. The specific polymer can prepare a rubber composition exhibiting good processability. In view of successful achievement of the aforementioned advantageous effects of the present disclosure, the specific polymer preferably has, at a terminal thereof, a nitrogen-containing group represented by the aforementioned formula (1-1) or (1-2), more preferably a group represented by the aforementioned formula (1-1).

The specific polymer preferably has, at one or both terminals thereof, a hydrocarbyloxysilyl group together with the group represented by the aforementioned formula (1). When, for example, the specific polymer is used for a tire, the presence of such a functional group is preferred since the dispersibility of a reinforcing filler (e.g., silica) is further improved, and low hysteresis loss property and abrasion resistance are more effectively improved.

The polymer composition of the present disclosure contains the specific polymer, silica, and a crosslinking agent. The amount of the specific polymer contained in the polymer composition is preferably 20 mass% or more, more preferably 30 mass% or more, still more preferably 40 mass% or more, relative to the total amount of the polymer composition.

Examples of the silica include wet silica (hydrated silica), dry silica (silicic anhydride), colloidal silica, precipitated silica, calcium silicate, aluminum silicate, and the like. Of these, wet silica is particularly preferred from the viewpoints of an improvement in fracture resistance, and the compatibility between wet grip property and low rolling resistance. The use of high dispersible-type silica is preferred for achieving effective dispersion of the silica in the polymer composition and improvements in physical properties and processability. These silica materials may be used singly or in combination of two or more species.

The polymer composition according to the present disclosure may optionally include any reinforcing filler (e.g., carbon black, clay or calcium carbonate) in addition to the silica. The grip performance and the fracture resistance of the resulting crosslinked polymer are improved by utilizing the carbon black in addition to the silica. The amount of silica contained in the polymer composition (or the total amount of silica and carbon black contained in the polymer composition when carbon black is used in combination) is preferably 20 to 130 parts by mass, more preferably 25 to 110 parts by mass, relative to 100 parts by mass of the total amount of polymer components contained in the polymer composition.

Examples of the crosslinking agent include sulfur, sulfur halides, organic peroxides, quinone dioximes, organic polyamine compounds, alkyl phenolic resins having a methylol group, and the like. Sulfur is generally used. The amount of sulfur is preferably 0.1 to 5 parts by mass, more preferably 0.5 to 3 parts by mass, relative to 100 parts by mass of the total amount of polymer components contained in the polymer composition.

The polymer composition of the present disclosure, which contains the specific polymer, may contain an additional rubber component. Examples of the type of the additional rubber component include, but are not particularly limited to, butadiene rubber (BR, such as high cis BR having a cis-1,4 bond content of 90% or more, or BR containing syndiotactic-1,2-polybutadiene (SPB)), styrene butadiene rubber (SBR), natural rubber (NR), isoprene rubber (IR), styrene-isoprene copolymer rubber, butadiene-isoprene copolymer rubber, and the like. The additional rubber component is more preferably BR or SBR. The amount of the additional rubber component is preferably 60 parts by mass or less, more preferably 50 parts by mass or less, relative to 100 parts by mass of the total amount of rubber components contained in the polymer composition.

The polymer composition may contain, in addition to the aforementioned components, any additive that is commonly used in a rubber composition for tire. Examples of the additive include an antioxidant, zinc oxide, stearic acid, a softener, sulfur, a vulcanization accelerator, a silane coupling agent, a compatibilizer, a vulcanization aid, a processing aid, a process oil, an anti-scorching agent, and the like. The amount of such additives incorporated into the polymer composition may be appropriately determined, so long as the advantageous effects of the present disclosure are not impaired.

The polymer composition of the present disclosure can be prepared through kneading of the specific polymer, silica, the crosslinking agent, and an optional component by means of, an open-type kneader (e.g., a roll) or a closed-type kneader (e.g., a Banbury mixer). The polymer composition is prepared into a crosslinked polymer through molding and subsequent crosslinking (vulcanization). The resultant crosslinked polymer can be applied to various rubber products. For example, the crosslinked polymer can be applied to tires (e.g., tire tread, undertread, carcass, sidewall, and bead); sealing materials, such as packing, gasket, weather strip, and O-ring; interior and exterior surface materials for various vehicles, such as automobile, ship, aircraft, and train; building materials; vibrationproof rubbers for industrial machines and facilities; hoses and hose covers, such as diaphragm, roll, radiator hose, and air hose; belts, such as belts for power transmission; linings; dust boots; materials for medical devices; fenders; insulating materials for electric wires; and other industrial products. In particular, the vulcanized rubber obtained by using the conjugated diene-based polymer of the present disclosure achieve excellent processability, low hysteresis loss property, wet skid resistance, and abrasion resistance. Thus, the vulcanized rubber of the present disclosure is particularly suitable for use as a material of a tire tread or sidewall.

The tire can be produced by a customary method. For example, if the aforementioned crosslinked polymer is used for a sidewall, the aforementioned polymer composition is mixed by means of a kneader to form a sheet, and the sheet is disposed outside a carcass and vulcanized by a customary method, to thereby form a sidewall rubber. A pneumatic tire is thereby produced.

### Examples

The present disclosure will next be described in detail by way of examples, which should not be construed as limiting the disclosure thereto. Unless otherwise specified, the units "part(s)" and "%" described in Examples and Comparative Examples refer to "part(s) by mass" and "mass%," respectively. Physical properties are determined as described below.
[Bonded styrene content (%)]: determined by means of ¹H-NMR (500 MHz).
[Vinyl bond content (mol%)]: the 1,2-vinyl bond content of a polymer was determined by means of ¹H-NMR (500 MHz).
[Molecular weight before modification]: the molecular weight (in terms of polystyrene) was determined from the retention time corresponding to the vertex of the maximum peak of a gel permeation chromatography (GPC) curve obtained by means of GPC (HLC-8120GPC (trade name, manufactured by Tosoh Corporation)).

### (GPC conditions)

Column: trade name "GMHXL" (manufactured by Tosoh Corporation) (two columns)
Column temperature: 40°C
Mobile phase: tetrahydrofuran
Flow rate: 1.0 mL/min
Sample concentration: 10 mg/20 mL

### [Example 1]

### <Synthesis and evaluation of conjugated diene-based polymer P1>

Cyclohexane (2,150 g), tetrahydrofuran (0.3 mol), styrene (1.0 mol), and 1,3-butadiene (7.2 mol) were added to an autoclave reactor (inner volume: 5 L) purged with nitrogen. The internal temperature of the reactor was adjusted to 10°C, and then n-butyllithium (4.8 mmol) was added to thereby initiate polymerization. The polymerization was performed under adiabatic conditions, and the maximum temperature reached 90°C. After the polymerization conversion had reached 99% (20 minutes after initiation of the polymerization), 1,3-butadiene (0.2 mol) was added over two minutes, and then N,N-dimethyl-N'-(3-(trimethoxysilyl)propyl)amidine (compound represented by the following formula (m-1)) serving as a modifying agent (4.34 mmol) was added, followed by reaction for 15 minutes, to thereby prepare a polymer solution C containing a conjugated diene-based polymer P1. The conjugated diene-based polymer had a peak molecular weight of 200,000 before modification reaction.

Subsequently, 2,6-di-tert-butyl-p-cresol (2.0 g) was added to the polymer solution C. The solvent was then removed through steam stripping by use of hot water (pH = 9, adjusted with sodium hydroxide), to thereby prepare a polymer. Thereafter, the polymer was dried by means of a heat roller at 110°C, to thereby produce a conjugated diene-based polymer P1.

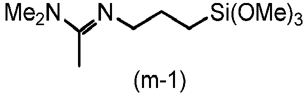

### <Production of polymer composition and vulcanized polymer>

The resultant conjugated diene-based polymer P1 was mixed with other components according to the formulation shown below in Table 1, and the mixture was kneaded to produce a polymer composition. The kneading was performed as follows. In a first kneading step, the resultant conjugated diene-based polymer P1, butadiene rubber, an extender oil, silica, carbon black, a silane coupling agent, stearic acid, an antioxidant, and zinc oxide were mixed and kneaded by means of a plastomill (inner volume: 250 mL) equipped with a temperature controller (charging rate: 72%, rotation speed: 60 rpm). In a second kneading step, the above-kneaded product was cooled to room temperature, and then mixed with sulfur and a vulcanization accelerator, followed by kneading. The resultant product was molded and vulcanized by means of a vulcanizing press at 160°C for a specific period of time, to thereby produce a crosslinked polymer (vulcanized rubber).

**[Table 1]**

| Compounding formulation | | Parts by mass |
|---|---|---|
| Conjugated diene-based polymer | | 70 |
| Butadiene rubber | *1 | 30 |
| Extender oil | *2 | 37.5 |
| Silica | *3 | 70 |
| Carbon black | *4 | 5.6 |
| Silane coupling agent | *5 | 5.6 |
| Stearic acid | | 2 |
| Antioxidant | *6 | 1 |
| Zinc oxide | | 3 |
| Vulcanization accelerator D | *7 | 1.5 |
| Vulcanization accelerator CZ | *8 | 1.8 |
| Sulfur | | 1.5 |

The details of each component in Table 1 are shown below.
*1: BR01 manufactured by JSR Corporation, *2: JOMO Process NC-140 manufactured by Japan Energy Corporation, *3: ZEOSIL 1165MP manufactured by Rhodia, *4: DIABLACK N339 manufactured by Mitsubishi Chemical Corporation, *5: Si75 manufactured by Evonik, *6: OZONONE 6C manufactured by Seiko Chemical Co., Ltd., *7: NOCCELER D manufactured by Ouchi Shinko Chemical Industrial Co., Ltd., *8: NOCCELER CZ manufactured by Ouchi Shinko Chemical Industrial Co., Ltd.

### <Evaluation of properties>

The above-prepared polymer composition and vulcanized rubber were evaluated for properties described below. The results of evaluation are shown in Table 2.

### (1) Mooney viscosity (Mooney viscosity of composition)

The polymer composition before vulcanization was used as a sample for measurement. Mooney viscosity was determined according to JIS K6300-1 by use of an L rotor under the following conditions: preheating: 1 minute, rotor operation time: 4 minutes, temperature: 100°C. A higher Mooney viscosity indicates superior processability.

### (2) Evaluation of abrasion resistance

The vulcanized rubber was used as a sample for measurement. Abrasion resistance was determined by means of a DIN wear tester (manufactured by Toyo Seiki) according to JIS K6264 at a load of 10 N and 25°C. Abrasion resistance was indicated by an index with respect to that (taken as 100) of Comparative Example 1. A lower index indicates superior abrasion resistance.

### (3) Strain property (ΔG')

The vulcanized rubber was used as a sample for measurement. Strain property was determined by means of a dynamic spectrometer (manufactured by Rheometrics, USA) at a tensile dynamic strain of 0.1 to 10%, an angular velocity of 100 radians/sec, and 50°C. Strain property was indicated by an index with respect to that (taken as 100) of Comparative Example 1. A lower index indicates superior dispersibility of a filler.

### (4) tanδ temperature property

The vulcanized rubber was used as a sample for measurement. The tanδ was determined by means of a dynamic spectrometer (manufactured by Rheometrics, USA) at 0°C and 50°C at a tensile dynamic strain of 0.7% (0.14% at 0°C) and an angular velocity of 100 radians/sec. The tanδ was indicated by an index with respect to that (taken as 100) of Comparative Example 1. A higher index of 0°C tanδ indicates superior wet skid resistance. A lower index of 50°C tanδ indicates smaller energy loss and superior low hysteresis loss property.

### [Example 2]

### <Synthesis and evaluation of conjugated diene-based polymer P2>

The procedure (including polymerization and terminal modification) of Example 1 was repeated, except that the amount of n-butyllithium used was changed to 4.6 mmol, and the modifying agent was changed to 2-methyl-1-(3-(trimethoxysilyl)propyl)-4,5-dihydro-1A-imidazole (compound represented by the following formula (m-2)), to thereby produce a conjugated diene-based polymer P2. The conjugated diene-based polymer had a peak molecular weight of 200,000 before modification reaction. A polymer composition and a vulcanized rubber were prepared from the conjugated diene-based polymer P2 in the same manner as employed in Example 1. The polymer composition and the vulcanized rubber were evaluated for the aforementioned properties. The results of evaluation are shown in Table 2.

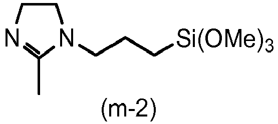

### [Example 3]

### <Synthesis and evaluation of conjugated diene-based polymer P3>

The procedure (including polymerization and terminal modification) of Example 1 was repeated, except that the amount of n-butyllithium used was changed to 4.6 mmol, and the modifying agent was changed to 2-phenyl-1-(3-(trimethoxysilyl)propyl)-4,5-dihydro-1A-imidazole (compound represented by the following formula (m-3)), to thereby produce a conjugated diene-based polymer P3. The conjugated diene-based polymer had a peak molecular weight of 200,000 before modification reaction. A polymer composition and a vulcanized rubber were prepared from the conjugated diene-based polymer P3 in the same manner as employed in Example 1. The polymer composition and the vulcanized rubber were evaluated for the aforementioned properties. The results of evaluation are shown in Table 2.

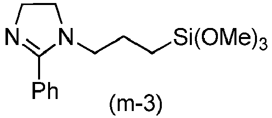

### [Comparative Example 1]

### <Synthesis and evaluation of conjugated diene-based polymer PC1>

The procedure (including polymerization) of Example 1 was repeated, except that n-octol (4.60 mmol) was added in place of the modifying agent, and the reaction was stopped 10 minutes later, to thereby produce a conjugated diene-based polymer PC1. A polymer composition and a vulcanized rubber were prepared from the conjugated diene-based polymer PC1 in the same manner as employed in Example 1. The polymer composition and the vulcanized rubber were evaluated for the aforementioned properties. The results of evaluation are shown in Table 2.

**[Table 2]**

| | | Example 1 | Example 2 | Example 3 | Comparative Example 1 |
|---|---|---|---|---|---|
| Type of conjugated diene-based polymer | | P1 | P2 | P3 | PC1 |
| Modifying agent | | m-1 | m-2 | m-3 | - |

| Evaluation | | | | | |
|---|---|---|---|---|---|
| Bonded styrene content | [%] | 20 | 19 | 20 | 20 |
| Vinyl bond content | [mol%] | 53 | 52 | 52 | 52 |
| Comp'd MV | (M1+4) 100°C | 50 | 48 | 49 | 30 |
| DIN abrasion | 10N [cm3] | 70 | 69 | 68 | 100 |
| Strain property (50°C) | ΔG'[MPa] | 14 | 28 | 26 | 100 |
| tanδ temperature property | 0°Ctanδ | 155 | 144 | 144 | 100 |
| | 50°Ctanδ | 67 | 73 | 71 | 100 |

As shown in Table 2, the conjugated diene-based polymer (Examples 1 to 3) having a terminal modified with a nitrogen-containing group represented by the aforementioned formula (1) achieved superior filler dispersibility as compared with the conjugated diene-based polymer (Comparative Example 1) having an unmodified terminal. In Examples 1 to 3, such an improvement in filler dispersibility resulted in a good index of abrasion resistance of the vulcanized rubber. In Examples 1 to 3, 0°C tanδ is greater than that in Comparative Example 1, whereas 50°C tanδ is smaller than that in Comparative Example 1. These results demonstrated that a conjugated diene-based polymer having a terminal modified with a group represented by the aforementioned formula (1) can achieve well-balanced improvements in wet skid resistance and low hysteresis loss property. Thus, the conjugated diene-based polymer of the present disclosure can achieve well-balanced improvements in abrasion resistance and low hysteresis loss property, and can also achieve an improvement in wet skid resistance.

## Claims

1. A conjugated diene-based polymer comprising a structural unit derived from a conjugated diene compound and having, at a terminal of the polymer, at lease one nitrogen-containing group represented by formula (1): 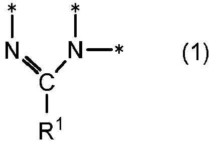 wherein R¹ is a hydrocarbyl group, and the symbol "*" is a bonding site.

2. The conjugated diene-based polymer according to claim 1, wherein the at least one nitrogen-containing group represented by the formula (1) and present at the terminal of the polymer comprises at least one group represented by formula (1-1) or (1-2): 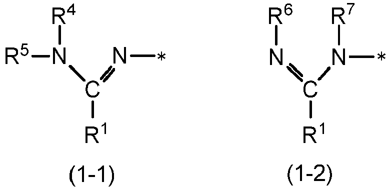 wherein R⁴ and R⁵ are each independently a hydrocarbyl group; R⁶ and R⁷ are each independently a hydrocarbyl group, or R⁶ and R⁷ are bonded to each other to form a cyclic structure with the carbon atom and the two nitrogen atoms; R¹ has the same meaning as defined in the formula (1); and the symbol "*" is a bonding site.

3. A method for producing a conjugated diene-based polymer, the method comprising the steps of:
polymerizing a monomer containing a conjugated diene compound in the presence of an alkali metal compound or an alkaline earth metal compound, thereby preparing a polymer having an active terminal; and
reacting the polymer having an active terminal with a modifying agent having a functional group capable of reacting with the active terminal and at least one nitrogen-containing group represented by formula (1): 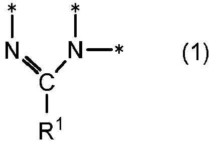 wherein R¹ is a hydrocarbyl group, and the symbol "*" is a bonding site.

4. The method for producing a conjugated diene-based polymer according to claim 3, wherein the modifying agent is a compound represented by formula (2): 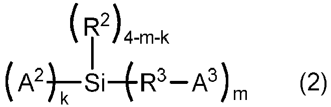 wherein R² is a hydrocarbyl group; R³ is a hydrocarbylene group; A² is a monovalent group containing a functional group capable of reacting with the active terminal of the polymer; A³ is a monovalent group having a group represented by the formula (1) and having no active hydrogen; m and k are each independently an integer of 1 to 3; m + k ≤ 4; and, when a plurality of groups R², R³, A², or A³ are present, each of the groups R², R³, A², or A³ is as defined above.

5. A polymer composition comprising the conjugated diene-based polymer according to claim 1 or 2, or the conjugated diene-based polymer produced by the method according to claim 3 or 4, silica, and a crosslinking agent.

6. A crosslinked polymer produced through crosslinking of the polymer composition according to claim 5.

7. A tire, obtained by employing the crosslinked polymer according to claim 6 as a tread material, a sidewall material, or both.

## Patentansprüche

1. Konjugiertes Polymer auf Dienbasis, umfassend eine Struktureinheit, die von einer konjugierten Dienverbindung abgeleitet ist und an einem Ende des Polymers zumindest eine stickstoffhaltige Gruppe, dargestellt durch die Formel (1), aufweist: 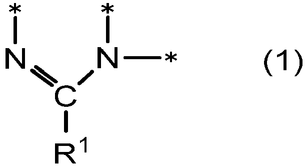 wobei R¹ eine Kohlenwasserstoffgruppe ist und das Symbol "*" eine Bindungsstelle ist.

2. Konjugiertes Polymer auf Dienbasis nach Anspruch 1, wobei die zumindest eine stickstoffhaltige Gruppe, die durch die Formel (1) dargestellt ist und am Ende des Polymers vorhanden ist, zumindest eine Gruppe, dargestellt durch die Formel (1-1) oder (1-2), umfasst: 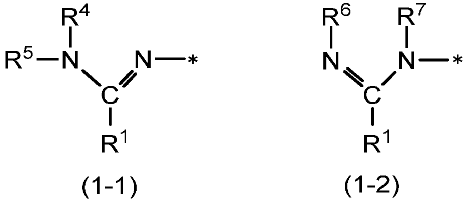 wobei R⁴ und R⁵ jeweils unabhängig eine Kohlenwasserstoffgruppe sind; R⁶ und R⁷ jeweils unabhängig eine Kohlenwasserstoffgruppe sind, oder R⁶ und R⁷ miteinander verbunden sind, um eine cyclische Struktur mit dem Kohlenstoffatom und den beiden Stickstoffatomen zu bilden; R¹ die gleiche Bedeutung hat, wie in der Formel (1) definiert; und das Symbol "*" eine Bindungsstelle ist.

3. Verfahren zur Herstellung eines konjugierten Polymers auf Dienbasis, wobei das Verfahren die folgenden Schritte umfasst:
Polymerisieren eines Monomers, das eine konjugierte Dienverbindung enthält, in Gegenwart einer Alkalimetallverbindung oder einer Erdalkalimetallverbindung, wodurch ein Polymer, das ein aktives Ende aufweist, hergestellt wird; und
Umsetzen des Polymers, das ein aktives Ende aufweist, mit einem Modifizierungsmittel, das eine funktionelle Gruppe, die in der Lage ist, mit dem aktiven Ende zu reagieren, und zumindest eine stickstoffhaltige Gruppe, dargestellt durch die Formel (1), aufweist: 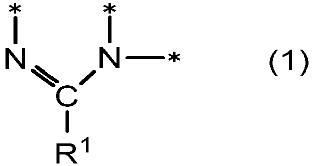 wobei R¹ eine Kohlenwasserstoffgruppe ist und das Symbol "*" eine Bindungsstelle ist.

4. Verfahren zur Herstellung eines konjugierten Polymers auf Dienbasis nach Anspruch 3, wobei das Modifizierungsmittel eine Verbindung, dargestellt durch die Formel (2), ist: 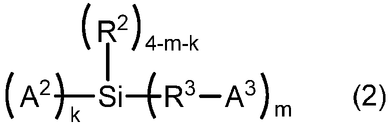 wobei R² eine Kohlenwasserstoffgruppe ist; R³ eine Kohlenwasserstoffgruppe ist; A² eine einwertige Gruppe ist, die eine funktionelle Gruppe enthält, die in der Lage ist, mit dem aktiven Ende des Polymers zu reagieren; A³ eine einwertige Gruppe ist, die eine Gruppe aufweist, die durch die Formel (1) dargestellt ist und keinen aktiven Wasserstoff aufweist; m und k jeweils unabhängig eine ganze Zahl von 1 bis 3 sind; m + k ≤ 4; und, wenn eine Mehrzahl von Gruppen R², R³, A² oder A³ vorhanden sind, jede der Gruppen R², R³, A² oder A³ wie oben definiert ist.

5. Polymerzusammensetzung, umfassend das konjugierte Polymer auf Dienbasis nach Anspruch 1 oder 2 oder das konjugierte Polymer auf Dienbasis, das nach dem Verfahren nach Anspruch 3 oder 4 hergestellt wird, Silica und ein Vernetzungsmittel.

6. Vernetztes Polymer, hergestellt durch Vernetzung der Polymerzusammensetzung nach Anspruch 5.

7. Reifen, erhalten durch Anwendung des vernetzten Polymers nach Anspruch 6 als Laufflächenmaterial, Seitenwandmaterial oder beides.

## Revendications

1. Polymère à base de diène conjugué comprenant un motif structurel dérivé d'un composé diène conjugué et ayant, à une extrémité du polymère, au moins un groupe azoté représenté par la formule (1) : 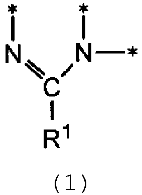 dans laquelle R¹ est un groupe hydrocarbyle, et le symbole "*" est un site de liaison.

2. Polymère à base de diène conjugué selon la revendication 1, dans lequel l'au moins un groupe azoté représenté par la formule (1) et présent à l'extrémité du polymère comprend au moins un groupe représenté par la formule (1-1) ou (1-2) : 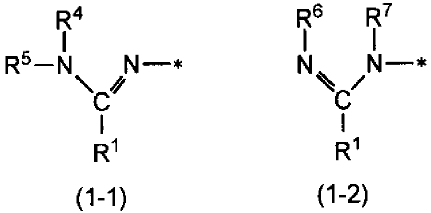 formules dans lesquelles chacun de R⁴ et R⁵ est indépendamment un groupe hydrocarbyle ; chacun de R⁶ et R⁷ est indépendamment un groupe hydrocarbyle, ou bien R⁶ et R⁷ sont liés l'un à l'autre pour former une structure cyclique avec l'atome de carbone et les deux atomes d'azote ; R¹ a la même signification que celle définie dans la formule (1) ; et le symbole "*" est un site de liaison.

3. Procédé pour produire un polymère à base de diène conjugué, le procédé comprenant les étapes suivantes :
polymérisation d'un monomère contenant un composé diène conjugué en présence d'un composé de métal alcalin ou d'un composé de métal alcalino-terreux, en conséquence de quoi un polymère ayant une extrémité active est préparé ; et
réaction du polymère ayant une extrémité active avec un agent modificateur ayant un groupe fonctionnel capable de réagir avec l'extrémité active et au moins un groupe azoté représenté par la formule (1) : 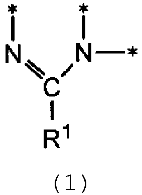 dans laquelle R¹ est un groupe hydrocarbyle, et le symbole "*" est un site de liaison.

4. Procédé pour produire un polymère à base de diène conjugué selon la revendication 3, dans lequel l'agent modificateur est un composé représenté par la formule (2) : 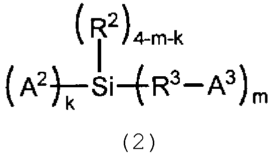 dans laquelle R² est un groupe hydrocarbyle ; R³ est un groupe hydrocarbylène ; A² est un groupe monovalent contenant un groupe fonctionnel capable de réagir avec l'extrémité active du polymère ; A³ est un groupe monovalent ayant un groupe représenté par la formule (1) et n'ayant pas d'hydrogène actif ; chacun de m et k est indépendamment un entier de 1 à 3 ; m + k ≤ 4 ; et, quand plusieurs groupes R², R³, A² ou A³ sont présents, chacun des groupes R², R³, A² ou A³ est tel que défini ci-dessus.

5. Composition de polymère comprenant le polymère à base de diène conjugué selon la revendication 1 ou 2, ou le polymère à base de diène conjugué produit par le procédé selon la revendication 3 ou 4, de la silice, et un agent de réticulation.

6. Polymère réticulé produit par réticulation de la composition de polymère selon la revendication 5.

7. Pneu obtenu par l'emploi du polymère réticulé selon la revendication 6 en tant que matériau de bande de roulement, matériau de flanc, ou les deux.
